# EUROPÄISCHE PATENTSCHRIFT

(11) **EP 3 336 472 B1**
(45) Veröffentlichungstag und Bekanntmachung des Hinweises auf die Patenterteilung: **19.04.2023**
(21) Anmeldenummer: 16203842.6
(22) Anmeldetag: 13.12.2016
(51) Int. Cl.: F28D 19/04, F23L 15/04

(54) **ROTATIONSWÄRMETAUSCHER-SET**
ROTATION HEAT EXCHANGER SET
KIT D'ÉCHANGEUR DE CHALEUR ROTATIF

(43) Veröffentlichungstag der Anmeldung: 20.06.2018
(73) Patentinhaber: Wolf GmbH, 84048 Mainburg (DE); KASTT, SPOL. S.R.O., 500 03, Hradec Králové (CZ)
(72) Erfinder: TAJZLER, Petr, 503 01 Hradec Králové 16 (CZ); RIEBESECKER, Richard, 84189 Wurmsham (DE)
(74) Vertreter: Popp, Eugen

(56) Entgegenhaltungen:
- DE-A1- 1 451 279
- DE-A1- 2 316 508
- JP-A- S5 818 090
- US-A- 5 713 411

## Beschreibung

Die Erfindung betrifft ein Rotationswärmetauscher-Set sowie einen entsprechenden Rotationswärmetauscher und Verfahren zur Herstellung eines Rotationswärmetauschers.

Ein Rotationswärmetauscher ist beispielsweise aus EP 2 520 890 A1 bekannt. Derartige Rotationswärmetauscher werden bevorzugt zur Wärmerückgewinnung (oder "Kälterückgewinnung") eingesetzt. Beispielsweise kann bei einem üblichen Rotationswärmetauscher durch einen Bereich einer Speichermasse warme Abluft geblasen werden, die Wärme auf Wände von Strömungskanälen innerhalb der Speichermasse überträgt. Bei weiterer Rotation der Speichermasse erreichen die aufgewärmten Kanäle einen Bereich, in dem die Strömungskanäle mit kalter Außen- bzw. Frischluft beaufschlagt werden können, und die aufgewärmten Kanalwände geben die aufgenommene Energie an die durchströmende Außenluft ab und kühlen dabei selber ab. Übliche Wärmeräder (rotierende Speichermassen) können Durchmesser von mehreren Metern aufweisen. Dadurch gestaltet sich die Montage üblicherweise sehr aufwändig. Gerade bei größeren Rotationswärmetauschern werden dabei die Einzelteile des Rotationswärmetauschers oftmals auf mehreren Paletten an die Baustelle geliefert. Dort erfolgt dann der Zusammenbau. Das Wärmerad (die rotierende Speichermasse) wird dabei kuchenstückartig zusammengesetzt, d.h. einzelne Kreissegmente werden bereitgestellt und sukzessive aneinander befestigt, so dass das Wärmerad aufgebaut werden kann. Gegebenenfalls können sogar die einzelnen Kreissegmente wieder in einzelne Kreis-Ringsegmente unterteilt sein, die sukzessive zur Herstellung eines einzelnen Kreissegments aneinandergefügt werden. Der Aufwand auf der Baustelle, insbesondere Zeitaufwand, ist entsprechend hoch. Bei einem Wärmetauscherrad mit fünf Metern Durchmesser beträgt der Zeitaufwand für die Montage auf der Baustelle mehr als zwei Tage mit mindestens zwei Monteuren ("Richtmeistern"),

Aus JPS 58-18090, welches den Oberbegriff des Anspruchs 1 offenbart, ist es bekannt, Module aus mehreren Kreissegmenten zusammenzustellen.

Es ist Aufgabe der Erfindung einen Rotationswärmetauscher sowie ein Verfahren zur Herstellung desselben vorzuschlagen, wobei, insbesondere auch bei der Verwendung von vergleichsweise großen Wärmerädern, eine einfache und insbesondere schnelle Montage auf der Baustelle erfolgen kann.

Diese Aufgabe wird durch die Merkmale des Anspruches 1 sowie der Ansprüche 11, 13 und 14 gelöst.

Ein Kerngedanke der Erfindung liegt darin ein Rotationswärmetauscher-Set vorzubereiten. Dieses Set umfasst zwei Module, die wiederum (bei einem Zusammenbau) das gesamte Wärmerad (zumindest annähernd) ausbilden. Durch eine derartige modulartige Ausbildung ist es möglich den Zeitaufwand für dieMontage auf der Baustelle erheblich (um mindestens den Faktor 5) zu reduzieren. Insbesondere entfällt das bisher durchgeführte aufwändige Aneinanderbauen von einzelnen (kuchenstückartigen) Kreissegmenten. Erfindungsgemäß wurde dabei auch erkannt, dass diese Vorteile, eventuelle Nachteile bzw. Schwierigkeiten, die mit einer modulartigen Ausbildung des rotierenden Wärmerades, überwiegen. Bei üblichen Wärmerädern, die rotierende Teile darstellen, ergeben sich gewisse Schwierigkeiten daraus, dass aufgrund der drehbaren Lagerung eine "einfache Halbierung" nicht möglich ist. Insofern liegt ein besonderer Erfindungsgedanke auch darin, nicht nur ein (beispielsweise unteres) Modul vorzusehen, auf dem dann sukzessive (wie weiter oben beschrieben) einzelne kreissegmentartige Wärmeradabschnitte angefügt werden, sondern zwei Module auszubilden, die dann gemeinsam (zumindest annähernd) das gesamte Wärmerad definieren. Bei dem ersten Modul handelt es sich vorzugsweise um ein unteres Modul, bei dem zweiten Modul handelt es sich vorzugsweise um ein oberes Modul. Unter einem unteren Modul ist ein Modul zu verstehen, das so konfiguriert ist, dass es am Montageort auf einen Unterboden aufgestellt werden kann und zwar derart, dass das entsprechende obere Modul auf dem unteren Modul montiert werden kann. Eine Trennfläche zwischen oberem und unterem Modul ist dann vorzugsweise horizontal. Alternativ können die beiden Module auch nebeneinander angeordnet sein, derart, dass eine Trennfläche (zumindest im Wesentlichen) vertikal verläuft (im zusammengebauten Zustand). Generell ist eine Trennfläche zwischen erstem und zweitem Modul vorzugsweise parallel zu einer axialen Richtung.

Erstes und zweites Teil sollen zumindest annähernd das gesamte Wärmerad (im zusammengebauten Zustand) ausbilden, was vorzugsweise bedeutet, dass zumindest 80 %, insbesondere zumindest 95 % oder 100 % des Wärmerades durch die zwei Module gebildet wird. Jedes Modul bildet für sich gesehen eine Einheit, besteht also aus miteinander verbundenen (zusammenhängenden) Teilen. Das zweite Modul ist jedoch separat gegenüber dem ersten Modul vorgesehen, es sind also zwischen erstem und zweitem Modul keine Verbindungen (ggf. von Verpackungen oder Schutzeinrichtungen oder dgl. abgesehen) zwischen den beiden Modulen vorgesehen. Vorzugsweise ist unter einer zumindest annähernden Ausbildung des gesamten Wärmerades zu verstehen, dass das durch die beiden Wärmeradteile definierte Hohlraumvolumen (also das Volumen der einzelnen Strömungskanäle) mindestens 80 %, vorzugsweise mindestens 90 % oder 100 % des gesamten Hohlraumvolumens des (zusammengebauten) Wärmerades darstellt. Alternativ oder zusätzlich ist vorzugsweise unter einer zumindest annähernden Ausbildung des gesamten Wärmerades zu verstehen, dass das durch die beiden Wärmeradteile definierte Gesamtgewicht mindestens 80 %, vorzugsweise mindestens 90 % oder 100 % des gesamten Gewichts des (zusammengebauten) Wärmerades darstellt.

Das erste Modul umfasst vorzugsweise ein erstes Gehäuseteil (eines Rahmengehäuses). Das zweite Modul umfasst vorzugsweise ein zweites Gehäuseteil (des Rahmengehäuses). Erstes und zweites Gehäuseteil können (zumindest annähernd) das gesamte Rahmengehäuse ausbilden. Unter einer zumindest annähernden Ausbildung des gesamten Rahmengehäuses ist vorzugsweise zu verstehen, dass erstes und zweites Gehäuseteil zumindest 80 %, vorzugsweise mindestens 90 % oder 100 % des Gesamtgewichtes und/oder des durch das Rahmengehäuse definierten Innenvolumens definieren. Erstes und/oder zweites Gehäuseteil können jeweils 40 %, vorzugsweise 45 % oder (etwa) 50 % des Gesamtgewichtes des Rahmengehäuses oder des Innenvolumens des Rahmengehäuses definieren.

Unter einem Rahmengehäuse ist vorzugsweise dasjenige Bauteil zu verstehen, in dem (im zusammengebauten Zustand) das Wärmerad aufgenommen (und gelagert) ist. Entsprechend ist das erste Gehäuseteil vorzugsweise dasjenige Teil, in dem das erste Wärmeradteil aufgenommen ist und das zweite Gehäuseteil dasjenige Teil, in dem das zweite Wärmeradteil aufgenommen ist. Durch die Aufteilung der Wärmeradteile und Gehäuseteile auf die zwei Module wird insgesamt ein besonders einfaches Rotationswärmetauscher-Set geschaffen, das eine Montage (Zusammenbau) des Rotationswärmetauschers auf der Baustelle in kurzer Zeit ermöglicht.

Erstes und/oder zweites Modul umfassen mindestens eine Halteeinrichtung (insbesondere mindestens eine Hebeöse) zum Anheben des jeweiligen Moduls, insbesondere durch einen Kran. Vorzugsweise sind mindestens zwei Halteeinrichtungen (Hebeösen) an dem ersten und/oder zweiten Modul vorgesehen. In jedem Fall wird es dadurch ermöglicht, dass das (gesamte) erste bzw. zweite Modul angehoben werden kann und zwar insbesondere durch einen Kran, so dass die beiden Module im einfachsten Fall ausschließlich durch Bereitstellen und Bedienen des Krans an ihren Montageort verbracht und aufeinander angeordnet werden können. Ein besonderer Vorteil besteht dann auch darin, dass bei einer Montage auf einem Dach (wo entweder keine entsprechende Transporteinrichtungen, wie beispielsweise Gabelstapler fahren können oder dies zumindest deutlich erschwert ist) auf einfache und schnelle Art und Weise dennoch die nur wenigen Module errichtet und zusammengebaut werden können.

Erstes und/oder zweites Modul sind so konfiguriert, dass sie in ausschließlich in vertikaler Ausrichtung transportierbar sind. Die Transportierbarkeit in vertikaler Ausrichtung ist in diesem Zusammenhang als strukturelles Merkmal zu verstehen. In diesem Zusammenhang ist es bedeutsam, dass übliche Wärmeräder aufgrund ihrer Geometrie und insbesondere Größe nicht (zwingend) einen Transport im horizontalen Zustand erlauben. Aufgrund der beim Umlegen auftretenden Kräfte (z.B. Schub- und/oder Torsionskräfte) kann ein Modul bei einem Umlegen (bzw. einem Transport in horizontaler Ausrichtung) zerstört werden. Um zu erkennen, ob ein entsprechendes erstes und/oder zweites Modul umgelegt wurde bzw. horizontal transportiert (oder aufbewahrt) wurde kann mindestens ein entsprechender Sensor vorgesehen sein, der zum Erkennen eines derartigen Umlegens ausgewählt ist, beispielsweise ein Schock-Sensor. Ein solcher Sensor kann ggf. durch eine Anzeige (z.B. Farbkodierung) anzeigen, ob ein Umlegen stattgefunden hat.

Das Wärmerad weist vorzugsweise einen Durchmesser von mindestens 2,00 m, weiter vorzugsweise mindestens 2,50 m, noch weiter vorzugsweise mindestens 4,00 m auf. Insbesondere bei großen Wärmerädern sind die oben beschriebenen Effekte (insbesondere die Zeiteinsparung) besonders ausgeprägt.

Das erste Modul kann mindestens eine Schwenksicherung zur Arretierung einer Schwenkbewegung des ersten Wärmeradteils gegenüber dem ersten Gehäuseteil umfassen. Weiterhin kann das erste Modul mindestens eine Sicherungseinrichtung zum Sichern des ersten Wärmeradteils gegenüber einem Herausfallen aus dem ersten Gehäuseteil umfassen. Auch das zweite Modul kann mindestens eine Schwenksicherung zur Arretierung einer Schwenkbewegung des zweiten Wärmeradteils gegenüber dem zweiten Gehäuseteil umfassen und/oder mindestens eine Sicherungseinrichtung zum Sichern des zweiten Wärmeradteils gegenüber einem Herausfallen aus dem zweiten Gehäuseteil. Im Allgemeinen ist festzustellen, dass (insbesondere bei einem Transport in vertikaler Ausrichtung) beispielsweise das zweite Modul aus seinem zugeordneten zweiten Gehäuseteil grundsätzlich herausfallen kann, da es ggf. nicht (wie im zusammengebauten Zustand) durch die rotierfähige Lagerung bzw. das jeweils andere Modul gesichert ist. Wenn nun beispielsweise das erste Modul bereits (als Basisteil) auf der Baustelle errichtet ist und das zweite Modul darauf montiert werden soll, muss das zweite Wärmeradteil ggf. so orientiert werden, dass es nach unten aus dem Gehäuseteil herausfallen kann. Durch die mindestens eine Sicherungseinrichtung kann dies jedoch verhindert werden. Eine derartige Sicherungseinrichtung wird dann (vorzugsweise) am Ende der Montage entfernt. Die mindestens eine Sicherungseinrichtung ist also (vorzugsweise) lösbar von dem ersten bzw. zweiten Wärmeradteil ausgebildet und/oder lösbar von dem ersten bzw. zweiten Gehäuseteil ausgebildet. Gegebenenfalls wäre auch vorstellbar, dass die Sicherungseinrichtung am ersten und/oder zweiten Gehäuseteil verbleibt, jedoch von dem jeweiligen Wärmeradteil abgelöst wird (beispielsweise weggeschwenkt wird oder translatorisch, ggf. riegelartig, wegbewegt wird). Die mindestens eine Schwenksicherung des ersten und/oder zweiten Moduls erleichtert sowohl den Transport als auch die Montage auf der Baustelle. Insbesondere wird dadurch erreicht, dass ein ggf. in dem zugeordneten Gehäuseteil (z.B. ersten Gehäuseteil) gelagertes Modul (z.B. erstes Modul) das aufgrund der (rotierfähigen) Lagerung verschwenken kann, in Ruhe bleibt. Auch gilt, dass eine derartige Schwenksicherung (wie auch die obige Sicherungseinrichtung) ggf. (am Ende der Montage) entfernt werden kann (also lösbar ausgebildet ist) oder zumindest von dem ersten bzw. zweiten Wärmeradteil wegbewegt werden (weggeschwenkt oder translatorisch, insbesondere riegelartig, wegbewegt werden) kann. Insbesondere durch die mindestens eine Schwenksicherung und/oder mindestens eine Sicherungseinrichtung kann der Transport und insbesondere auch Zusammenbau auf der Baustelle effektiv durchgeführt werden.

Erstes und zweites Modul sind zumindest annähernd gleich groß und/oder zumindest annähernd gleich schwer. Vorzugsweise hat das jeweils (im Vergleich) kleinere Modul eine Größe, die mindestens 80 %, vorzugsweise mindestens 90 % der Größe des (im Vergleich) größeren Moduls entspricht. Die Größe soll hier insbesondere durch ein Volumen definiert werden, das durch eine Hüllfläche des jeweiligen Moduls definiert wird. Unter einem zumindest annähernd gleichen Gewicht ist ein Gewicht des (im Vergleich) leichteren Moduls von mindestens 80 %, vorzugsweise mindestens 90 % gegenüber einem Gewicht des (im Vergleich) schwereren Moduls zu verstehen.

Erstes und zweites Wärmeradteil sind zumindest annähernd gleich groß und/oder zumindest annähernd gleich schwer. Vorzugsweise hat das jeweils (im Vergleich) kleinere Wärmeradteil eine Größe, die mindestens 80 %, vorzugsweise mindestens 90 % der Größe des (im Vergleich) größeren Wärmeradteils entspricht. Die Größe soll hier insbesondere durch ein Volumen definiert werden, das durch eine Hüllfläche des jeweiligen Wärmeradteils definiert wird. Unter einem zumindest annähernd gleichen Gewicht ist ein Gewicht des (im Vergleich) leichteren Wärmeradteils von mindestens 80 %, vorzugsweise mindestens 90 % gegenüber einem Gewicht des (im Vergleich) schwereren Wärmeradteils zu verstehen.

Erstes und zweites Gehäuseteil sind zumindest annähernd gleich groß und/oder zumindest annähernd gleich schwer. Vorzugsweise hat das jeweils (im Vergleich) kleinere Gehäuseteil eine Größe, die mindestens 80 %, vorzugsweise mindestens 90 % der Größe des (im Vergleich) größeren Gehäuseteils entspricht. Die Größe soll hier insbesondere durch ein Volumen definiert werden, das durch eine Hüllfläche des jeweiligen Gehäuseteils definiert wird. Unter einem zumindest annähernd gleichen Gewicht ist ein Gewicht des (im Vergleich) leichteren Gehäuseteils von mindestens 80 %, vorzugsweise mindestens 90 % gegenüber einem Gewicht des (im Vergleich) schwereren Gehäuseteils zu verstehen.

Durch jeweils (zumindest annähernd) gleich große Module bzw. Wärmeradteile bzw. Gehäuseteile wird ein effektiver Transport und eine schnelle Montage gefördert.

Eine Wärmeradachse wird vorzugsweise durch das erste Modul (insbesondere vollständig) ausgebildet. Die Wärmeradachse ist vorzugsweise gegenüber dem Gehäuse bzw. ersten Gehäuseteil feststehend ausgebildet, so dass das Wärmerad um die Wärmeradachse herum rotiert. Im Betrieb ist das Wärmerad also vorzugsweise rotierfähig auf der Wärmeradachse gelagert. Durch die Zuordnung der Wärmeradachse, insbesondere die Zuordnung der vollständigen Wärmeradachse, zu einem (insbesondere dem ersten, alternativ dem zweiten) Modulwird der Zusammenbau auf der Baustelle erleichtert.

Das erste Modul kann ein erstes (insbesondere teil-hohlzylindrisches oder hohlzylindrisches) Lagerteil, zur rotierfähigen Lagerung auf einer (insbesondere der obigen) Wärmeradachse umfassen. Alternativ oder zusätzlich kann das zweite Modul ein zweites (insbesondere teil-hohlzylindrisches oder hohlzylindrisches, vorzugsweise halb-hohlzylindrisches) Lagerteil zur rotierfähigen Lagerung auf der Wärmeradachse umfassen. Erstes und zweites Lagerteil bilden vorzugsweise (zumindest annähernd) einen Hohlzylinder aus. Unter einem Teil-Hohlzylinder ist insbesondere ein Abschnitt eines Hohlzylinders zu verstehen, dessen Stirnflächen durch einen Ringsektor gebildet werden (der also entsteht, wenn ein Hohlzylinder entlang einer Fläche, die parallel zu der Zylinderachse ist, geteilt wird). Ein Halb-Hohlzylinder ist ein Hohlzylinder, dessen Stirnflächen durch ein Ringsegment gebildet werden, das sich über einen Winkelbereich von 180 Grad erstreckt (bzw. eine Struktur, die sich ergibt, wenn ein Hohlzylinder entlang einer Fläche, in der die Hohlzylinderachse liegt, geteilt wird). Insoweit von einem Zylinder oder einer zylindrischen Struktur die Rede ist, ist insbesondere ein Kreiszylinder bzw. eine kreiszylindrische Struktur gemeint. Besonders bevorzugt weist eines der Module ein hohlzylindrisches Lagerteil auf und das andere Modul ein teil-hohlzylindrisches, insbesondere halb-hohlzylindrisches, Lagerteil. Beim Zusammenbau kann dann dieses teil-hohlzylindrische (halb-hohlzylindrische) Lagerteil auf das hohlzylindrische Lagerteil aufgelegt und mit diesem verbunden (beispielsweise verschraubt oder verschweißt) werden. Das hohlzylindrische Lagerteil kann insbesondere so ausgebildet sein, dass es einen Abschnitt aufweist, der (gespiegelt) dem teil-hohlzylindrischen Lagerteil entspricht, so dass sich insgesamt ein homogener Hohl-Zylinder (mit konstanter Wandstärke) ausbildet, wenn erstes und zweites Modul zusammengebaut werden. Über eine derartige Zwiebelschalenstruktur kann schnell und effektiv eine zuverlässige Verbindung zwischen den beiden Modulen im Bereich der Lagerung erfolgen.

Das erste und/oder zweite Modul weist vorzugsweise ein Wälzlager, insbesondere Kugellager oder Nagellager, auf. Das Wälzlager ist vorzugsweise zwischen der Wärmeradachse und einem (insbesondere dem oben beschriebenen), vorzugsweise hohlzylindrischen, Lagerteil angeordnet. In einer konkreten Ausführungsform weist eines der Module (z.B. das erste Modul) bereits die Wärmeradachse (vollständig) auf, sowie ein auf der Wärmeradachse aufgebrachtes Wälzlager (vollständig) sowie ein hohlzylindrisches Lagerteil. Dieses hohlzylindrische Lagerteil ist dann vorzugsweise bereits so konfiguriert, dass ein teil-hohlzylindrisches Lagerteil des anderen (z.B. zweiten) Moduls angebracht werden kann. Insgesamt wird der Montageaufwand dadurch reduziert.

Das erste und/oder zweite Modul kann mindestens ein Positionierelement, insbesondere Positionierstift, umfassen. Das Positionierelement (der Positionierstift) wirkt vorzugweise mit einem weiteren Positionierelement (insbesondere einer Positionierausnehmung) an dem jeweils anderen Modul derart zusammen, dass bei einem Zusammenbau von erstem und zweitem Modul, die Module gegeneinander festgelegt sind. Das mindestens eine Positionierelement (Positionierstift bzw. Positionierausnehmung) kann an dem Gehäuse und/oder an dem Wärmerad angeordnet sein. Eine Länge des Positionierstiftes beträgt vorzugsweise mindestens 3 cm, weiter vorzugsweise mindestens 5 cm. Das mindestens eine Positionierelement kann ein Gewinde (zur Realisierung einer Schraubverbindung) aufweisen. Vorzugsweise ist mindestens ein Positionierelement in einem Nabenbereich (an der Nabe) angeordnet. Über das mindestens eine Positionierelement in dem Nabenbereich kann eine einfache und besonders genaue Positionierung erfolgen. Alternativ oder zusätzlich kann mindestens eine Positionierelement an einer Umfangsfläche des ersten und/oder zweiten Wärmeradteils angeordnet sein (insbesondere für eine eher grobe (Vor-) Positionierung).

Das Wärmerad weist vorzugsweise mehrere Speichen auf. Einzelne Segmente des Wärmerades können (insbesondere werkseitig) durch Verschraubung der Speichen miteinander verbunden werden. Die Verbindung von erstem und zweitem Modul (vorzugsweise auf einer Baustelle) erfolgt vorzugsweise durch Verbindung (Verschraubung) entlang von (in Bezug auf das gesamte Wärmerad betrachtet mittleren) Speichen.

Das erste und/oder zweite Wärmeradteil umfasst/umfassen vorzugsweise mehrere (insbesondere durch Speichen voneinander getrennte) Segmente, die durch an einer Stirnfläche oder beiden Stirnflächen des entsprechenden Wärmeradteiles angeordnete (flache) Leisten, vorzugsweise Flachstähle, miteinander verbunden, insbesondere miteinander verschraubt sind. Alternativ oder zusätzlich werden erstes und zweites Wärmeradteil durch an einer Stirnfläche oder beiden Stirnflächen der Wärmeradteile angeordnete (flache) Leisten, vorzugsweise Flachstähle, miteinander verbunden, insbesondere miteinander verschraubt. Die Leisten haben vorzugsweise eine Länge, die mindestens 10-mal so groß ist wie eine Breite und/oder mindestens 30-mal so groß ist wie eine Dicke. Die Breite der Leisten kann mindestens 3-mal so groß sein wie die Dicke. Besonders bevorzugt entsprechen die Leisten Speichenabdeckungen, die Speichenränder abdecken.

Die oben genannte Aufgabe wird weiterhin gelöst durch einen Rotationswärmetauscher, der durch Zusammenbau des oben beschriebenen Sets hergestellt ist. Der Rotationswärmetauscher ist vorzugsweise zur (insbesondere ausschließlich zur) aufrechten Montage konfiguriert.

Die oben genannte Aufgabe wird weiterhin gelöst durch ein Verfahren zur Herstellung eines Rotationswärmetauscher-Sets, insbesondere der oben beschriebenen Art und/oder zur Herstellung eines Rotationswärmetauschers der oben beschriebenen Art, umfassend die Schritte: Zusammenbau eines ersten, insbesondere unteren, Moduls, und eines zweiten, insbesondere oberen, Moduls, wobei das erste Modul ein erstes Wärmeradteil eines Wärmerades umfasst und das zweite Modul ein zweites Wärmeradteil des Wärmerades umfasst, wobei erstes und zweites Wärmeradteil (zumindest annähernd) das gesamte Wärmerad ausbilden.

Die oben genannte Aufgabe wird weiterhin gelöst durch ein Verfahren zur Herstellung eines Rotationswärmetausches, insbesondere unter Verwendung des Rotationswärmetauscher-Sets der oben beschriebenen Art und/oder zur Herstellung eines Rotationswärmetauschers der oben beschriebenen Art, umfassend die Schritte:
a) Zusammenbau oder Bereitstellung eines ersten, insbesondere unteren, Moduls, und eines zweiten, insbesondere oberen, Moduls, vorzugsweise herstellerseitig, wobei das erste Modul ein erstes Wärmeradteil eines Wärmerades umfasst und das zweite Modul ein zweites Wärmeradteil des Wärmerades umfasst, wobei erstes und zweites Wärmeradteil, zumindest annähernd, das gesamte Wärmerad ausbilden und
b) Zusammenbau von erstem und zweitem Modul nach dem Schritt a), insbesondere auf der Baustelle.

Schritt a) erfolgt vorzugsweise werkseitig.

Im Schritt b) wird das erste Modul vorzugsweise zunächst aufrecht aufgestellt und daraufhin das zweite Modul (insbesondere mittels eines Kranes) auf dem ersten Modul angeordnet.

In Schritt a) wird vorzugsweise mindesten eine Schwenksicherung (vorzugsweise der oben beschreiben Art) und/oder mindestens ein Sicherungselement (vorzugsweise der oben beschriebenen Art) an dem ersten und/oder zweiten Modul angebracht werden. Nach dem Schritt b (bzw. am Ende des Schrittes b) können Schwenksicherung und/oder Sicherungselement gelöst bzw. entfernt werden.

Das Wärmerad wird vorzugsweise (beispielsweise über Keilriemen) an seiner Umfangsfläche angetrieben.

In einer bevorzugten Ausführungsform ist der (vollständige) Rotationswärmetauscher in zwei Hälften geteilt. Die Wärmeräder (Rotor und Massen) sind in den beiden Hälften bereits vormontiert. Beide Module können mit Hebeösen ausgestattet sein (insbesondere zur Kranmontage). Das Oberteil kann per Kran auf das Unterteil aufgestellt werden. Gehäuse und Wärmerad (Rotor) können miteinander verbunden sein.

Gegenstand der Erfindung ist auch ein Wärmetauschersystem, umfassend einen Rotationswärmetauscher, wie oben beschrieben, und mindestens zwei, insbesondere mindestens vier Luftkanäle. Ein erster Luftkanal kann der Zufuhr eines ersten Luftstroms dienen. Ein zweiter Luftkanal kann der Abfuhr des ersten Luftstroms von dem Wärmerad dienen. Ein dritter Luftkanal kann der Zufuhr eines zweiten (insbesondere gegenläufigen) Luftstroms zu dem Wärmerad dienen. Ein vierter Luftkanal kann der Abfuhr des zweiten Luftstroms dienen.

Gegenstand der Erfindung ist weiterhin ein Bodenbelag oder ein Gebäude, auf dem mindestens ein Rotationswärmetauscher der oben beschriebenen Art montiert oder ein Wärmetauschersystem der oben beschriebenen Art montiert ist.

Das Wärmerad kann mindestens 20 cm, vorzugsweise mindestens 35 cm tief sein (wobei eine Tiefe die Ausdehnung entlang der axialen Richtung meint). Der Rotationswärmetauscher bzw. das erfindungsgemäße Rotationswärmetauschersystem kann ausgebildet sein, einen Volumenstrom eines ersten Luftstroms von mindestens 10.000 m³/h, vorzugsweise mindestens 50.000 m³/h zu gewährleisten.

Das Rotationswärmetauschersystem kann weiterhin mindestens eine Förderpumpe zur Förderung des ersten Luftstroms und/oder mindestens eine Förderpumpe zur Förderung des zweiten Luftstroms aufweisen.

Das Wärmerad kann durch mindestens einen (an einer Umfangsfläche des Wärmerades angeordnet) Außengurt stabilisiert bzw. zusammengehalten werden.

Der Rotationswärmetauscher kann einen Wirkungsgrad (Wärmerückgewinnungsgrad) von mindestens 60 %, vorzugsweise mindestens 80 % aufweisen.

Das Wärmerad, insbesondere die Wärmetauscherflächen (also vorzugsweise die Fluidkanäle, durch die das Fluid, insbesondere Luft, strömt) können zumindest abschnittsweise aus Aluminium oder einer Aluminiumlegierung aufgebaut sein.

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine schematische Darstellung eines erfindungsgemäßen Wärmetauschers;
- Fig. 2: eine schematische Darstellung eines Wärmetauscher-Sets zur Herstellung des Wärmetauschers gemäß Fig. 1;
- Fig. 3: ein erfindungsgemäßen Wärmetauschersystem;
- Fig. 4: eine Schrägansicht eines erfindungsgemäßen Wärmerades mit voneinander separierten Wärmeradteilen;
- Fig. 5: das Wärmerad gemäß Fig. 4 im zusammengebauten Zustand;
- Fig. 6: eine vergrößerte Darstellung eines Abschnitts des Wärmerades gemäß Fig. 4;
- Fig. 7: einen weiteren vergrößerten Abschnitt des Wärmerades gemäß Fig. 4;
- Fig. 8: den Ausschnitt gemäß Fig. 7 in zusammengebautem Zustand des Wärmerades;
- Fig. 9: eine Seitenansicht des Abschnittes gemäß Fig. 6;
- Fig. 10: eine Seitenansicht des Abschnittes gemäß Fig. 9 in zusammengebautem Zustand; und
- Fig. 11: einen Ausschnitt analog Fig. 6 einer zweiten Ausführungsform des Rotationswärmetauschers.

In der nachfolgenden Beschreibung werden für gleiche und gleichwirkende Teile dieselben Bezugsziffern verwendet.

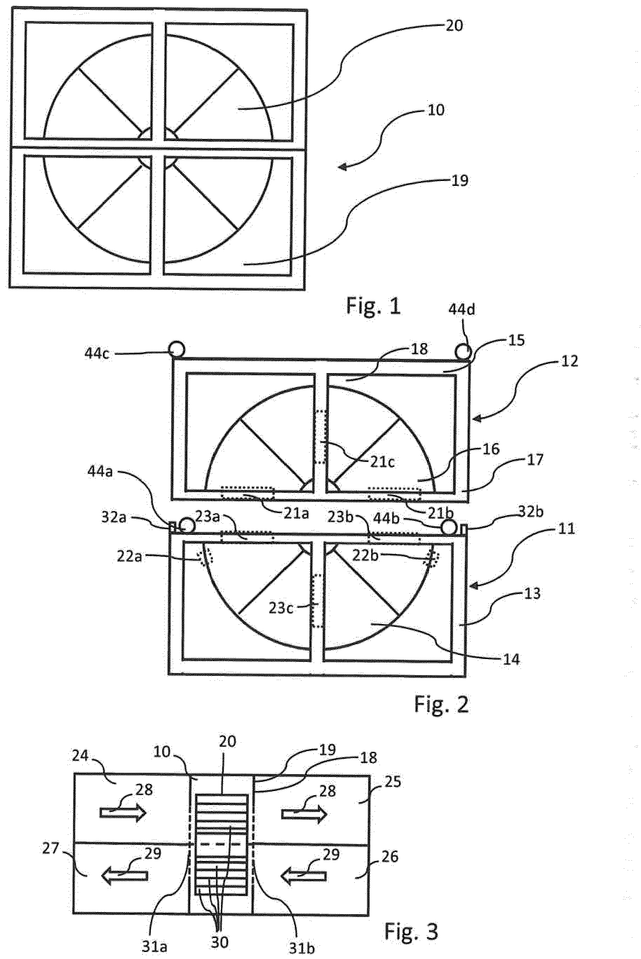

Fig. 1 zeigt einen erfindungsgemäßen Rotationswärmetauscher und Fig. 2 ein entsprechendes Rotationswärmetauscher-Set zur Herstellung des Rotationswärmetauschers gemäß Fig. 1. Das Rotationswärmetauscher-Set gemäß Fig. 2 umfasst ein erstes (unteres) Modul 11 sowie ein zweites (oberes) Modul 12. Das erste Modul 11 weist ein erstes Gehäuseteil 13 sowie ein erstes Wärmeradteil 14 auf. Das zweite Modul 12 weist ein zweites Gehäuseteil 15 sowie ein zweites Wärmeradteil 16 auf. Das erste Gehäuseteil 13 und das zweite Gehäuseteil 15 weisen jeweils Rahmenteile 17 sowie Wandteile 18 auf, die zusammen (siehe Fig. 1) ein Rahmengehäuse 19 ausbilden. Innerhalb dieses Rahmengehäuses 19 ist ein aus dem ersten Wärmeradteil 14 und zweiten Wärmeradteil 16 aufgebautes Wärmerad 20 aufgenommen. Das Wärmerad 20 ist innerhalb des Rahmengehäuses 19 rotierbar gelagert.

Um zu verhindern, dass das zweite Wärmeradteil 16 aus dem zweiten Gehäuseteil 15 (wie in Fig. 2 dargestellt) herausfällt sind Sicherungseinrichtungen 21a, 21b und 21c dargestellt. Die Sicherungseinrichtungen 21a, 21b und 21c können das zweite Wärmeradteil 16 gegenüber dem zweiten Gehäuseteil 15 sichern bzw. festhalten. Das erste Wärmeradteil 14 ist vorzugsweise in dem ersten Gehäuseteil 13 so gelagert (wie weiter unten beschrieben), dass es nicht herausfallen kann. Es können jedoch Schwenksicherungen 22a, 22b vorgesehen sein, die verhindern, dass das erste Wärmeradteil 14, beispielsweise während des Transports und/oder der Montage, unerwünscht verschwenkt. Optional können analog zum zweiten Modul auch beim ersten Modul Sicherungseinrichtungen 23a, 23b und 23c vorgesehen sein, um das erste Wärmeradteil zu sichern (beispielsweise gegenüber einem Verschwenken und/oder Ablösen vom ersten Gehäuseteil 13).

In Fig. 2 sind weiterhin Sicherungselemente 32a, 32b gezeigt (beispielsweise Sicherungsstifte und/oder Sicherungsschrauben), über die die Gehäuseteile 13, 15 aneinander montiert werden können.

Halteeinrichtungen (Hebeösen) 44a, 44b am unteren Modul 11 ermöglichen ein Anheben des (gesamten) unteren Moduls, z.B. durch einen Kran. Halteeinrichtungen (Hebeösen) 44c, 44d am oberen Modul 12 ermöglichen ein Anheben des (gesamten) oberen Moduls, z.B. durch einen Kran.

Fig. 3 zeigt eine schematische Darstellung eines Rotationswärmetauschersystems umfassend den Rotationswärmetauscher 10 sowie einen ersten Kanal 24, einen zweiten Kanal 25, einen dritten Kanal 26 und einen vierten Kanal 27. Über den ersten Kanal 10 wird ein erster Luftstrom 28 zum Rotationswärmetauscher 10 geführt. Nach Durchtritt durch den Rotationswärmetauscher 10 wird die Luft in dem zweiten Kanal 25 abgeführt. Ein zweiter Luftstrom 29 wird über den dritten Kanal 26 (von der gegenüberliegenden Richtung kommend) zum Rotationswärmetauscher 10 geführt und nach Durchtritt durch den Rotationswärmetauscher 10 über den vierten Kanal 27 abgeführt.

Der wärmere der Luftströme 28, 29 gibt Wärme an das Wärmerad 20 ab. Diese Wärme (bzw. ein Teil dieser Wärme) wird von dem kühleren Luftstrom der beiden Luftströme aufgenommen. Dadurch wird Wärme von dem wärmeren Luftstrom auf den kühleren Luftstrom übertragen. Je nach Schaltung kann dabei Wärme oder Kälte rückgewonnen werden.

Das Wärmerad 20 weist eine Vielzahl von Wärmeradkanälen 30 auf, durch die die Luft strömen kann. Die Wände der Kanäle 30 sind vorzugsweise aus Aluminium oder einer Aluminiumlegierung. In Fig. 3 sind nur einige wenige Kanäle schematisch gezeigt. Die Anzahl dieser Kanäle kann jedoch ggf. sehr hoch sein (beispielsweise mehr als 1.000 oder mehr als 10.000 Kanäle). Durch gestrichelte Linien sind in Fig. 3 Öffnungen 31a, 31b im Rahmengehäuse 19 gezeigt, durch die die Luftströme 28, 29 zum Wärmerad hin und vom Wärmerad wegströmen können.

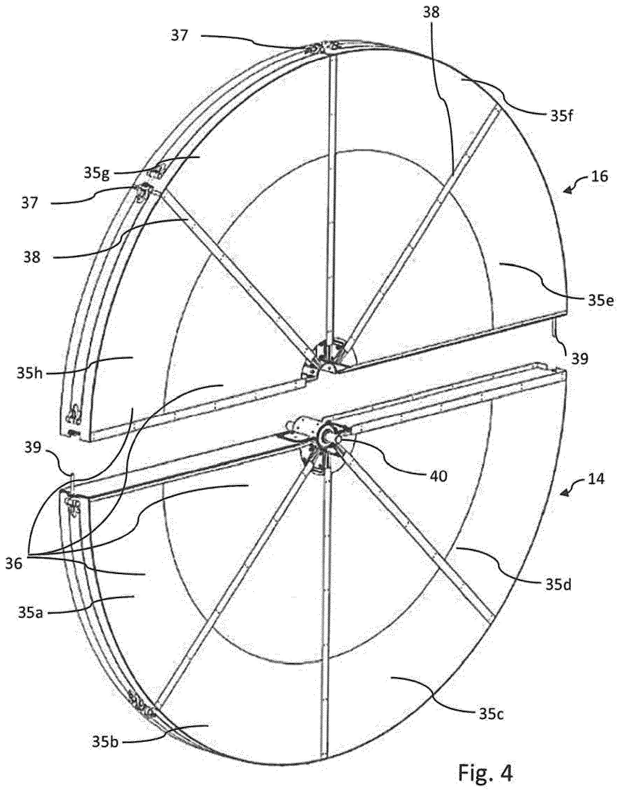

Fig. 4 zeigt eine Schrägansicht des ersten Wärmeradteils 14 sowie des zweiten Wärmeradteils 16 im größeren Detail. Das erste Wärmeradteil 14 umfasst vier Kreissegmente 35a, 35b, 35c, 35d, wobei jedes Kreissegment wiederum in zwei Untersegmente 36 unterteilt ist. Entsprechend umfasst das zweite Wärmeradteil 16 vier Kreissegmente 35e, 35f, 35f und 35h, die jeweils wiederum in zwei Untersegmente 36 unterteilt sind. Die konkrete Anzahl der Unterteilung in Kreissegmente ist nicht zwingend. Auch muss nicht eine Unterteilung in zwei Untersegmente 36 vorgesehen sein (ggf. können auch keine Untersegmente oder mehr als zwei Untersegmente vorgesehen sein). Zwischen den einzelnen Kreissegmenten 35a bis 35h sind Speichen 37 ausgebildet, die an den Stirnflächen durch Speichenabdeckungen 38 abgedeckt sind. Die Speichenabdeckungen 38 haben auch den Zweck, die durch die Speichen 37 voneinander getrennten Segmente miteinander zu verbinden, insbesondere zu verschrauben.

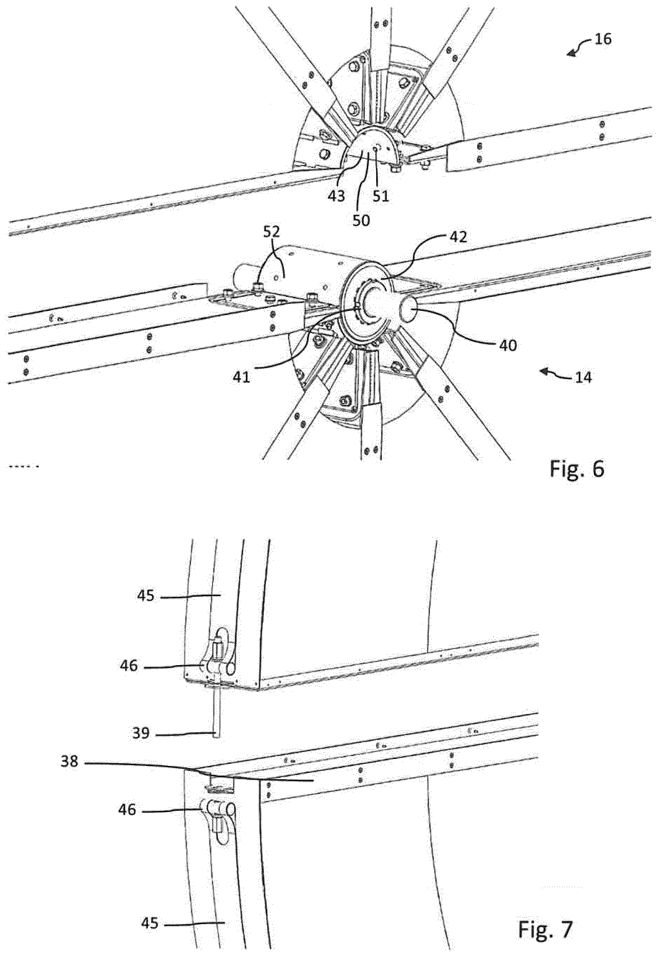

Insgesamt sind erstes Wärmeradteil 14 und zweites Wärmeradteil 16, wie in Fig. 4 ausgebildet, wenn die beiden Module getrennt voneinander (werkseitig) vorbereitet sind. Insbesondere auf der Baustelle können dann die beiden Wärmeradteile 14, 16 aneinander montiert werden. Zur Positionierung sind dafür Positionierelemente 39 (Positionierstifte) vorgesehen, über die eine Position von erstem und zweitem Wärmeradteil gegeneinander, zumindest grob, festgelegt werden kann. Gleichzeitig kann über die Positionierelemente 39 ggf. eine Schraubverbindung realisiert werden (dazu können diese vorzugsweise ein Gewinde aufweisen). Zur exakten Positionierung sind dann insbesondere Positionierelemente 51 (Positionierstifte, vorzugsweise mit Gewinde zur Realisierung einer Schraubverbindung) in einem Nabenbereich vorgesehen (siehe Fig. 6).

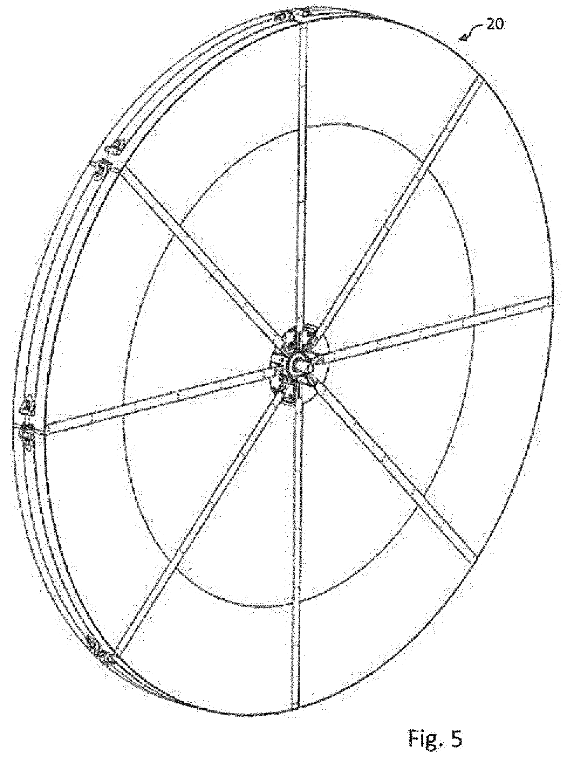

In Fig. 5 ist das Wärmerad 20 in zusammengebautem Zustand dargestellt.

In Fig. 6 ist ein (zentraler) Abschnitt des Wärmerades 20 (bzw. der Wärmeradteile 14 und 16) vergrößert dargestellt. Wie man dort erkennt ist dem ersten Wärmeradteil 14 bzw. entsprechend dem ersten Modul eine Wärmeradachse 40 zugeordnet. Weiterhin weist das erste Wärmeradteil 14 ein Wälzlager 41 sowie ein erstes Lagerteil 42 auf. Das erste Lagerteil 42 bildet einen Hohlzylinder und ist zur Aufnahme eines zweiten Lagerteils 43 des zweiten Wärmeradteils 16 ausgebildet. Das zweite Lagerteil 43 bildet einen Halb-Hohlzylinder.

Erstes Lagerteil 42 und zweites Lagerteil 43 können ggf. zur Ausbildung eines gemeinsamen Lagerteils miteinander verbunden (verschraubt) werden.

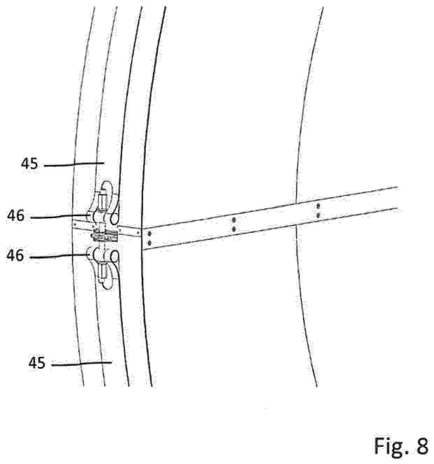

In Fig. 7 ist ein weiterer vergrößerter Ausschnitt des Wärmerades (bzw. des ersten und zweiten Wärmeradteils) dargestellt. Insbesondere ist dort nochmals das Positionierelement 39 erkennbar. Weiterhin sind Haltegurte 45 erkennbar, die zusammen mit den (miteinander verbindbaren) Haltegurt-Halterungen 46 zum Zusammenhalt des Wärmerades (im montierten Zustand) beitragen. Der montierte Zustand ist (ausschnittsweise) in Fig. 8 gezeigt.

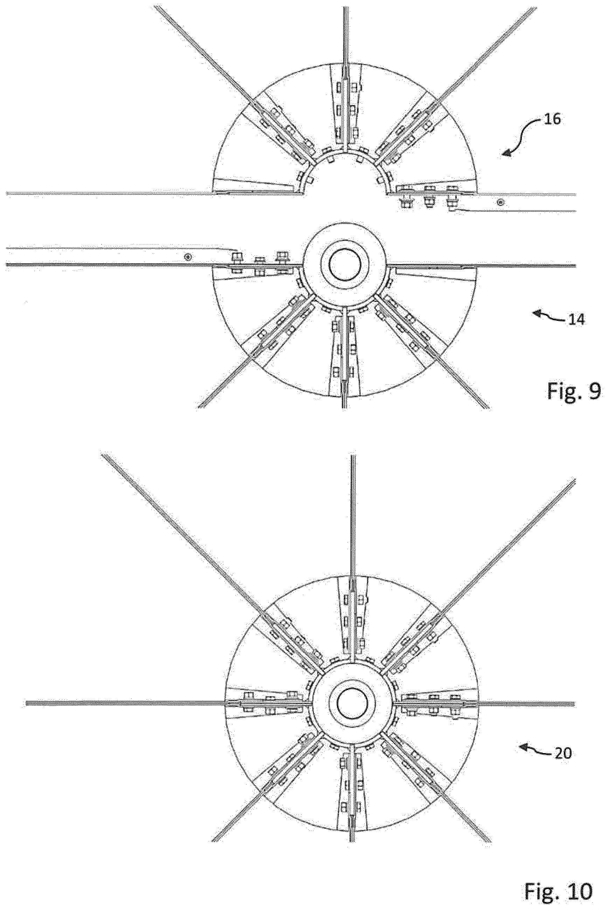

In Fig. 9 und 10 ist nochmals in einer Seitenansicht der zwiebelschalenartige Aufbau der Lagerung des Wärmerades gezeigt.

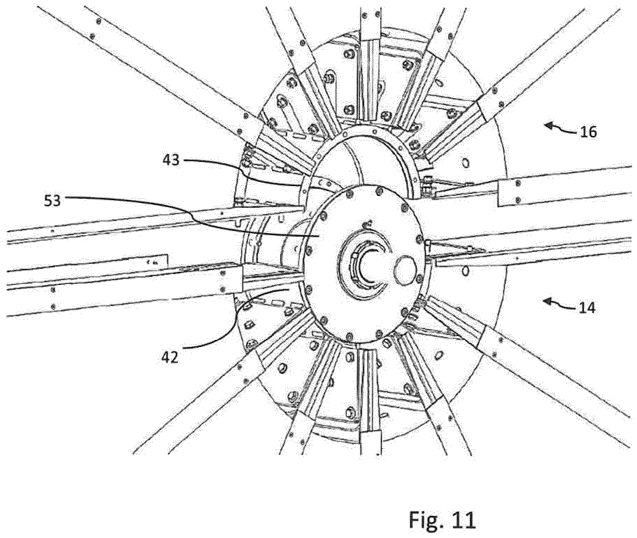

In Fig. 11 ist ein Ausschnitt analog Fig. 6 gezeigt, jedoch mit einer abweichenden Ausgestaltung der Lagerung. In Fig. 6 wird das zweite Lagerteil 43 über an einer Innenumfangswand 50 die als Befestigungseinrichtungen fungierenden Positionierelemente 51 (Schrauben) mit einer Außenumfangswand 52 des ersten Lagerteils 42 verbunden. In Fig. 11 erfolgt eine Verbindung des zweiten Lagerteils 43 mit einer (Ring-) Scheibe 53, die wiederum dem ersten Lagerteil 42 zugeordnet ist, bzw. Bestandteil des ersten Moduls ist. Die Scheibe 53 ist (bereits innerhalb des Rotationswärmetauscher-Sets) fest mit dem ersten Lagerteil 42 verbunden (beispielsweise verschraubt). Weiterhin unterscheidet sich die Ausführungsform, die ausschnittsweise in Fig. 11 dargestellt ist auch dadurch, dass hier die Anzahl der einzelnen Segmente höher ist (konkret weist hier jedes Modul sechs Ringsegmente auf).

### Bezugszeichen

- 10: Rotationswärmetauscher
- 11: Erstes Modul
- 12: Zweites Modul
- 13: Erstes Gehäuseteil
- 14: Erstes Wärmeradteil
- 15: Zweites Gehäuseteil
- 16: Zweites Wärmeradteil
- 17: Rahmenteil
- 18: Wandteil
- 19: Rahmengehäuse
- 20: Wärmerad
- 21a: Sicherungseinrichtung
- 21b: Sicherungseinrichtung
- 21c: Sicherungseinrichtung
- 22a: Schwenksicherung
- 22b: Schwenksicherung
- 23a: Sicherungseinrichtung
- 23b: Sicherungseinrichtung
- 23c: Sicherungseinrichtung
- 24: Erster Kanal
- 25: Zweiter Kanal
- 26: Dritter Kanal
- 27: Vierter Kanal
- 28: Erster Luftstrom
- 29: Zweiter Luftstrom
- 30: Wärmetauscherkanal
- 31a: Öffnung
- 31b: Öffnung
- 32a: Sicherungselement
- 32b: Sicherungselement
- 35a: Kreissegment
- 35b: Kreissegment
- 35c: Kreissegment
- 35d: Kreissegment
- 35e: Kreissegment
- 35f: Kreissegment
- 35g: Kreissegment
- 35h: Kreissegment
- 36: Untersegment
- 37: Speiche
- 38: Speichenabdeckung
- 39: Positionierelement
- 40: Wärmeradachse
- 41: Wälzlager
- 42: Erstes Lagerteil
- 43: Zweites Lagerteil
- 44a: Halteeinrichtung (Hebeöse)
- 44b: Halteeinrichtung (Hebeöse)
- 44c: Halteeinrichtung (Hebeöse)
- 44d: Halteeinrichtung (Hebeöse)
- 45: Haltegurt
- 46: Haltegurt-Halterung
- 50: Innenumfangswand
- 51: Positionierelement
- 52: Außenumfangswand
- 53: (Ring-) Scheibe

## Patentansprüche

1. Rotationswärmetauscher-Set, umfassend ein erstes, insbesondere unteres, Modul (11) und ein zweites, insbesondere oberes, gegenüber dem ersten Modul separat vorliegendes, Modul (12), wobei das erste Modul (11) ein erstes Wärmeradteil (14) eines Wärmerades (20) umfasst und das zweite Modul (12) ein zweites Wärmeradteil (16) des Wärmerades (20) umfasst, wobei erstes (14) und zweites (16) Wärmeradteil, zumindest annähernd, das gesamte Wärmerad (20) ausbilden,
**dadurch gekennzeichnet, dass**
erstes (11) und/oder zweites (12) Modul mindestens eine Halteeinrichtung (44a - 44d), insbesondere Hebeöse, zum Anheben des jeweiligen Modules (11, 12), insbesondere durch einen Kran, umfasst/umfassen und dass erstes (11) und/oder zweites (12) Modul ausschließlich in vertikaler Ausrichtung transportierbar ist/sind.

2. Rotationswärmetauscher-Set nach Anspruch 1,
**dadurch gekennzeichnet, dass**
das erste Modul (11) ein erstes Gehäuseteil (13) eines Rahmengehäuses (14) umfasst und das zweite Modul (12) ein zweites Gehäuseteil (15) des Rahmengehäuses (19) umfasst, wobei erstes (13) und zweites (15) Gehäuseteil, zumindest annähernd, das gesamte Rahmengehäuse (19) ausbilden.

3. Rotationswärmetauscher-Set nach einem der vorhergehenden Ansprüche,
**dadurch gekennzeichnet, dass**
das Wärmerad (20) einen Durchmesser von mindestens 2,00 m, vorzugsweise mindestens 2,50 m, weiter vorzugsweise mindestens 4,00 m aufweist.

4. Rotationswärmetauscher-Set nach einem der vorhergehenden Ansprüche,
**dadurch gekennzeichnet, dass**
das erste Modul (11) mindestens eine Schwenksicherung (22a, 22b) zur Arretierung einer Schwenkbewegung des ersten Wärmeradteils (14) gegenüber dem ersten Gehäuseteil (13) umfasst und/oder das zweite Modul (12) mindestens eine Schwenksicherung zur Arretierung einer Schwenkbewegung des zweiten Wärmeradteils gegenüber dem zweiten Gehäuseteil umfasst und/oder mindestens eine Sicherungseinrichtung (21a, 21b, 21c) zum Sichern des zweiten Wärmeradteils (16) gegenüber einem Herausfallen aus dem zweiten Gehäuseteil (15) umfasst.

5. Rotationswärmetauscher-Set nach einem der vorhergehenden Ansprüche,
**dadurch gekennzeichnet, dass**
erstes Modul (11) und zweites Modul (12), zumindest annähernd, gleich groß und/oder schwer sind und/oder
erstes Wärmeradteil (14) und zweites Wärmeradteil (16), zumindest annähernd, gleich groß und/oder schwer sind und/oder
erstes Gehäuseteil (13) und zweites Gehäuseteil (15), zumindest annähernd, gleich groß und/oder schwer sind.

6. Rotationswärmetauscher-Set nach einem der vorhergehenden Ansprüche,
**dadurch gekennzeichnet, dass**
eine Wärmeradachse (40) durch das erste oder zweite Modul, insbesondere vollständig, ausgebildet wird.

7. Rotationswärmetauscher-Set nach einem der vorhergehenden Ansprüche,
**dadurch gekennzeichnet, dass**
das erste Modul (11) ein erstes, insbesondere zumindest teil-hohlzylindrisches, Lagerteil (42), zur rotierfähigen Lagerung des Wärmerades auf einer Wärmeradachse (40), insbesondere der Wärmeradachse gemäß Anspruch 7, umfasst und das zweite Modul (12) ein zweites, insbesondere teil-hohlzylindrisches, vorzugsweise halb-hohlzylindrisches, Lagerteil (43) zur rotierfähigen Lagerung des Wärmerades (20) auf der Wärmeradachse (40) umfasst, wobei erstes (42) und zweites (43) Lagerteil vorzugsweise, zumindest annähernd, einen Hohlzylinder ausbilden.

8. Rotationswärmetauscher-Set nach einem der vorhergehenden Ansprüche,
**dadurch gekennzeichnet, dass**
das erste Modul (11) ein Wälzlager (41), insbesondere Kugellager oder Nadellager, umfasst, das vorzugsweise zwischen der Wärmeradachse (40) und einem Lagerteil angeordnet ist.

9. Rotationswärmetauscher-Set nach einem der vorhergehenden Ansprüche,
**dadurch gekennzeichnet, dass**
das erste (11) und/oder zweite (12) Modul mindestens ein Positionierelement, insbesondere Positionierstift, umfasst/umfassen, das mit einem Positionierelement, insbesondere einer Positionierausnehmung, an dem jeweils anderem Modul derart zusammenwirkt, dass bei einem Zusammenbau von erstem und zweitem Modul, die Module gegeneinander festgelegt sind und/oder
dass das erste (13) und/oder zweite (15) Gehäuseteil mindestens ein Positionierelement, insbesondere Positionierstift, umfasst/umfassen, das mit einem Positionierelement, insbesondere einer Positionierausnehmung, an dem jeweils anderem Gehäuseteil derart zusammenwirkt, dass bei einem Zusammenbau von erstem und zweitem Gehäuseteil, die Gehäuseteile gegeneinander festgelegt sind und/oder
dass das erste (14) und/oder zweite (16) Wärmeradteil mindestens ein Positionierelement, insbesondere Positionierstift, umfasst/umfassen, das mit einem Positionierelement, insbesondere einer Positionierausnehmung, an dem jeweils anderem Wärmeradteil derart zusammenwirkt, dass bei einem Zusammenbau von erstem und zweitem Wärmeradteil, die Wärmeradteile gegeneinander festgelegt sind.

10. Rotationswärmetauscher-Set nach einem der vorhergehenden Ansprüche,
**dadurch gekennzeichnet, dass**
das erste und/oder zweite Wärmeradteil mehrere Segmente umfasst/umfassen, die durch an einer Stirnfläche oder beiden Stirnflächen des entsprechenden Wärmeradteiles angeordnete Leisten, vorzugsweise Flachstähle, miteinander verbunden, insbesondere miteinander verschraubt sind und/oder
dass erstes und/oder zweites Wärmeradteil an einer Stirnfläche oder an beiden Stirnflächen mindestens eine Leiste, vorzugsweise mindestens einen Flachstahl aufweist, über die/den die beiden Wärmeradteile miteinander verbindbar, insbesondere miteinander verschraubbar sind.

11. Rotationswärmetauscher (10), hergestellt durch Zusammenbau des Sets nach einem der vorhergehenden Ansprüche.

12. Rotationswärmetauscher (10) nach Anspruch 11,
**dadurch gekennzeichnet, dass**
der Rotationswärmetauscher zur, insbesondere ausschließlich zur, aufrechten Montage, konfiguriert ist.

13. Verfahren zur Herstellung eines Rotationswärmetauscher-Sets, nach einem der Ansprüche 1 bis 11 umfassend die Schritte:
Zusammenbau eines ersten, insbesondere unteren, Moduls (11), und eines zweiten, insbesondere oberen, Moduls (12), wobei das erste Modul (11) ein erstes Wärmeradteil (14) eines Wärmerades (20) umfasst und das zweite Modul (12) ein zweites Wärmeradteil (16) des Wärmerades (20) umfasst, wobei erstes (14) und zweites (16) Wärmeradteil, zumindest annähernd, das gesamte Wärmerad (20) ausbilden

14. Verfahren zur Herstellung eines Rotationswärmetauschers (10), unter Verwendung des Rotationswärmetauscher-Sets nach einem der Ansprüche 1 bis 11 und/oder zur Herstellung eines Rotationswärmetauschers nach Anspruch 11 oder 12, umfassend die Schritte:
a) Zusammenbau oder Bereitstellung eines ersten, insbesondere unteren, Moduls (11), und eines zweiten, insbesondere oberen, Moduls (12), vorzugsweise herstellerseitig, wobei das erste Modul (11) ein erstes Wärmeradteil (14) eines Wärmerades (20) umfasst und das zweite Modul (12) ein zweites Wärmeradteil (16) des Wärmerades (20) umfasst, wobei erstes (14) und zweites (16) Wärmeradteil, zumindest annähernd, das gesamte Wärmerad (20) ausbilden und
b) Zusammenbau von erstem (11) und zweitem (12) Modul nach dem Schritt a), insbesondere auf der Baustelle,
wobei im Schritt b) vorzugsweise zunächst das erste Modul (11) aufrecht aufgestellt wird und daraufhin das zweite Modul (12), insbesondere mittels eines Kranes, auf dem ersten Modul (11) angeordnet wird.

## Claims

1. Rotary heat exchanger set, comprising a first, in particular lower, module (11) and a second, in particular upper, module (12) which is separate from the first module, wherein the first module (11) comprises a first heat wheel part (14) of a heat wheel (20) and the second module (12) comprises a second heat wheel part (16) of the heat wheel (20), wherein the first (14) and second (16) heat wheel parts form at least approximately the entire heat wheel (20), **characterized in that** the first (11) and/or second (12) module comprise(s) at least one holding device (44a-44d), in particular lifting eye, for lifting the respective module (11, 12), in particular by a crane, and **in that** the first (11) and/or second (12) module can be transported exclusively in a vertical orientation.

2. Rotary heat exchanger set according to claim 1, **characterized in that** the first module (11) comprises a first housing part (13) of a frame housing (14) and the second module (12) comprises a second housing part (15) of the frame housing (19), wherein the first (13) and second (15) housing parts form, at least approximately, the entire frame housing (19).

3. Rotary heat exchanger set according to one of the preceding claims, **characterized in that** the heat wheel (20) has a diameter of at least 2.00 m, preferably at least 2.50 m, further preferably at least 4.00 m.

4. Rotary heat exchanger set according to one of the preceding claims, **characterized in that** the first module (11) has at least one swivel lock (22a, 22b) for arresting a pivoting movement of the first heat wheel part (14) relative to the first housing part (13) and/or the second module (12) comprises at least one swivel lock for arresting a pivoting movement of the second heat wheel part relative to the second housing part and/or comprises at least one securing device (21a, 21b, 21c) for securing the second heat wheel part (16) against falling out of the second housing part (15).

5. Rotary heat exchanger set according to one of the preceding claims, **characterized in that** the first module (11) and second module (12) are, at least approximately, equal in size and/or weight and/or the first heat wheel part (14) and second heat wheel part (16) are, at least approximately, equal in size and/or weight and/or the first housing part (13) and second housing part (15) are, at least approximately, equal in size and/or weight.

6. Rotary heat exchanger set according to one of the preceding claims, **characterized in that** a heat wheel axis (40) is formed by the first or second module, in particular completely.

7. Rotary heat exchanger set according to one of the preceding claims, **characterized in that** the first module (11) comprises a first, in particular at least partially hollow-cylindrical, bearing part (42) for rotatably supporting the heat wheel on a heat wheel axis (40), in particular the heat wheel axis according to claim 7, and the second module (12) comprises a second, in particular partially hollow-cylindrical, preferably semi hollow-cylindrical, bearing part (43) for rotatably supporting the heat wheel (20) on the heat wheel axis (40), wherein the first (42) and second (43) bearing part preferably form, at least approximately, a hollow cylinder.

8. Rotary heat exchanger set according to one of the preceding claims, **characterized in that** the first module (11) comprises a rolling bearing (41), in particular ball bearing or needle bearing, which is preferably arranged between the heat wheel axis (40) and a bearing part.

9. Rotary heat exchanger set according to one of the preceding claims, **characterized in that** the first (11) and/or second (12) module comprise(s) at least one positioning element, in particular positioning pin, which interacts with a positioning element, in particular a positioning recess, on the respective other module in such a way that, when the first and second module are assembled, the modules are fixed against one another, and/or **in that** the first (13) and/or second (15) housing part comprise(s) at least one positioning element, in particular positioning pin, which interacts with a positioning element, in particular a positioning recess, on the respective other housing part in such a way that the housing parts are fixed against one another when the first and second housing parts are assembled, and/or **in that** the first (14) and/or second (16) heat wheel part comprise(s) at least one positioning element, in particular positioning pin, which interacts with a positioning element, in particular a positioning recess, on the respective other heat wheel part in such a way that the heat wheel parts are fixed against one another when the first and second heat wheel parts are assembled.

10. Rotary heat exchanger set according to one of the preceding claims, **characterized in that** the first and/or second heat wheel part comprise(s) a plurality of segments which are connected to one another, in particular screwed to one another, by strips, preferably flat steels, arranged on one end face or both end faces of the corresponding heat wheel part,
and/or **in that** the first and/or second heat wheel part comprise(s), on one end face or on both end faces, at least one strip, preferably at least one flat steel, via which the two heat wheel parts can be connected to one another, in particular screwed to one another.

11. Rotary heat exchanger (10), produced by assembling the set according to one of the preceding claims.

12. Rotary heat exchanger (10) according to claim 11, **characterized in that** the rotary heat exchanger is configured for, in particular exclusively for, upright assembly.

13. Method for producing a rotary heat exchanger set, according to one of claims 1 to 11, comprising the steps of:
assembling a first, in particular lower, module (11), and a second, in particular upper, module (12), wherein the first module (11) comprises a first heat wheel part (14) of a heat wheel (20) and the second module (12) comprises a second heat wheel part (16) of the heat wheel (20), wherein the first (14) and second (16) heat wheel parts form, at least approximately, the entire heat wheel (20).

14. Method for producing a rotary heat exchanger (10), using the rotary heat exchanger set according to one of claims 1 to 11 and/or for producing a rotary heat exchanger according to claim 11 or 12, comprising the steps of:
a) assembling or providing a first, in particular lower, module (11), and a second, in particular upper, module (12), preferably by the manufacturer, wherein the first module (11) comprises a first heat wheel part (14) of a heat wheel (20) and the second module (12) comprises a second heat wheel part (16) of the heat wheel (20), wherein the first (14) and second (16) heat wheel parts form, at least approximately, the entire heat wheel (20), and
b) assembling the first (11) and second (12) modules after step a), in particular on the construction site,
wherein in step b) the first module (11) is preferably first set upright and thereupon the second module (12) is arranged on the first module (11), in particular by means of a crane.

## Revendications

1. Ensemble d'échangeur de chaleur rotatif, comprenant un premier module (11), en particulier inférieur, et un deuxième module (12), en particulier supérieur, séparé du premier module, dans lequel le premier module (11) comprend une première partie de roue thermique (14) d'une roue thermique (20) et le deuxième module (12) comprend une deuxième partie de roue thermique (16) de la roue thermique (20), la première partie de roue thermique (14) et la deuxième (16) formant au moins approximativement la totalité de la roue thermique (20), **caractérisé en ce que** le premier module (11) et/ou le deuxième (12) comprennent au moins un dispositif de maintien (44a-44d), en particulier un anneau de levage, pour soulever le module (11, 12) en question, en particulier à l'aide d'une grue, et le premier module (11) et/ou le deuxième (12) peut être transporté uniquement dans une orientation verticale.

2. Ensemble d'échangeur de chaleur rotatif selon la revendication 1, **caractérisé en ce que** le premier module (11) comprend une première partie de coffre (13) d'un coffre d'encadrement (14) et le deuxième module (12) une deuxième partie de coffre (15) du coffre d'encadrement (19), la première partie de coffre (13) et la deuxième (15) formant, au moins approximativement, la totalité du coffre d'encadrement (19).

3. Ensemble d'échangeur de chaleur rotatif selon l'une des revendications précédentes, **caractérisé en ce que** la roue thermique (20) a un diamètre d'au moins 2,00 m, de préférence d'au moins 2,50 m, encore mieux d'au moins 4,00 m.

4. Ensemble d'échangeur de chaleur rotatif selon l'une des revendications précédentes, **caractérisé en ce que** le premier module (11) comprend au moins une sécurité anti-basculement (22a, 22b) pour bloquer un mouvement de basculement de la première partie de roue thermique (14) par rapport à la première partie de coffre (13) et/ou le deuxième module (12) comprend au moins une sécurité anti-basculement pour bloquer un mouvement de basculement de la deuxième partie de roue thermique par rapport à la deuxième partie de coffre et/ou comprend au moins un dispositif de sécurité (21a, 21b, 21c) pour assurer la deuxième partie de roue thermique (16) et l'empêcher de tomber hors de la deuxième partie de coffre (15).

5. Ensemble d'échangeur de chaleur rotatif selon l'une des revendications précédentes, **caractérisé en ce que** le premier module (11) et le deuxième module (12) sont au moins approximativement de la même taille et/ou du même poids et/ou la première partie de roue thermique (14) et la deuxième partie de roue thermique (16) sont au moins approximativement de la même taille et/ou du même poids et/ou la première partie de coffre (13) et la deuxième partie de coffre (15) sont au moins approximativement de la même taille et/ou du même poids.

6. Ensemble d'échangeur de chaleur rotatif selon l'une des revendications précédentes, **caractérisé en ce qu'**un axe de roue thermique (40) est formé, en particulier complètement, à travers le premier module et le deuxième.

7. Ensemble d'échangeur de chaleur rotatif selon l'une des revendications précédentes, **caractérisé en ce que** le premier module (11) comporte une première partie de palier (42), en particulier en forme au moins de partie de cylindre creux, en vue d'un appui avec possibilité de rotation de la roue thermique sur un axe de roue thermique (40), en particulier l'axe de roue thermique selon la revendication 7, et le deuxième module (12) comprend une deuxième partie de palier (43), en particulier en forme de partie de cylindre creux, de préférence de demi-cylindre creux, en vue d'un appui avec possibilité de rotation de la roue thermique (20) sur l'axe de roue thermique (40), la première partie de palier (42) et la deuxième (43) formant de préférence, au moins approximativement, un cylindre creux.

8. Ensemble d'échangeur de chaleur rotatif selon l'une des revendications précédentes, **caractérisé en ce que** le premier module (11) comporte un roulement (41), en particulier un roulement à billes ou un roulement à aiguilles, qui est de préférence disposé entre l'axe de roue thermique (40) et une partie de palier.

9. Ensemble d'échangeur de chaleur rotatif selon l'une des revendications précédentes, **caractérisé en ce que** le premier module (11) et/ou le deuxième (12) comportent au moins un élément de positionnement, en particulier une goupille de positionnement, qui coopère avec un élément de positionnement, en particulier un réceptacle de positionnement, sur l'autre module, de telle sorte que lors de l'assemblage du premier module et du deuxième, les modules soient fixés l'un par rapport à l'autre, et/ou
**en ce que** la première partie de coffre (13) et/ou la deuxième (15) comportent au moins un élément de positionnement, en particulier une goupille de positionnement, qui coopère avec un élément de positionnement, en particulier un réceptacle de positionnement, sur l'autre module, de telle sorte que lors de l'assemblage de la première partie de coffre et de la deuxième, les parties de coffre soient fixées l'une par rapport à l'autre, et/ou **en ce que** la première partie de roue thermique (14) et/ou la deuxième (16) comportent au moins un élément de positionnement, en particulier une goupille de positionnement, qui coopère avec un élément de positionnement, en particulier un réceptacle de positionnement, sur l'autre module, de telle sorte que lors de l'assemblage de la première partie de roue thermique et de la deuxième, les parties de roue thermique soient fixées l'une par rapport à l'autre.

10. Ensemble d'échangeur de chaleur rotatif selon l'une des revendications précédentes, **caractérisé en ce que** la première partie de roue thermique et/ou la deuxième comportent plusieurs segments qui sont reliés entre eux par des bandeaux, en particulier des fers plats en acier, disposées sur une face frontale ou les deux faces frontales de la partie de roue thermique correspondante, en particulier vissés ensemble, et/ou
la première partie de roue thermique et/ou la deuxième présentent sur une face frontale ou les deux faces frontales au moins un bandeau, de préférence un fer plat en acier, par laquelle les deux parties de roue thermique peuvent être reliées l'une à l'autre, en particulier vissées l'une à l'autre.

11. Échangeur de chaleur rotatif (10) fabriqué par l'assemblage de l'ensemble selon l'une des revendications précédentes.

12. Échangeur de chaleur rotatif (10) selon la revendication 11, **caractérisé en ce qu'**il est configuré pour un montage exclusivement vertical.

13. Procédé pour la fabrication d'un ensemble d'échangeur de chaleur rotatif selon l'une des revendications 1 à 11, comprenant les étapes d'assemblage d'un premier module (11), en particulier inférieur, et d'un deuxième module (12), en particulier supérieur, le premier module (11) comprenant une première partie de roue thermique (14) d'une roue thermique (20) et le deuxième module (12) comprenant une deuxième partie de roue thermique (16) de la roue thermique (20), la première partie de roue thermique (14) et la deuxième (16) formant au moins approximativement la totalité de la roue thermique (20).

14. Procédé pour la fabrication d'un échangeur de chaleur rotatif (10), utilisant l'ensemble d'échangeur de chaleur rotatif selon l'une des revendications 1 à 11 et/ou pour la fabrication d'un échangeur de chaleur rotatif selon la revendication 11 ou 12, comprenant les étapes suivantes :
a) assemblage ou fourniture d'un premier module (11), en particulier inférieur, et d'un deuxième module (12), en particulier supérieur, de préférence par le fabricant, le premier module (11) comprenant une première partie de roue thermique (14) d'une roue thermique (20) et le deuxième module (12) comprenant une deuxième partie de roue thermique (16) de la roue thermique (20), la première partie de roue thermique (14) et la deuxième (16) formant au moins approximativement la totalité de la roue thermique (20).
b) assemblage du premier module (11) et du deuxième (12) après l'étape a), en particulier sur le chantier,
dans lequel le premier module (11) est de préférence posé verticalement dans l'étape b) et le deuxième module (12) est ensuite disposé sur le premier module (11), en particulier au moyen d'une grue.
